# EUROPÄISCHE PATENTSCHRIFT

(11) **EP 1 020 256 B1**
(45) Veröffentlichungstag und Bekanntmachung des Hinweises auf die Patenterteilung: **01.10.2003**
(21) Anmeldenummer: 99811148.8
(22) Anmeldetag: 13.12.1999
(51) Int. Cl.: B25C 1/14, B25C 1/18

(54) **Pulverkraftbetriebenes Setzgerät**
Powder-actuated fastener driving tool
Outil de scellement actionné par poudre

(30) Priorität: 15.01.1999 DE 19901268
(43) Veröffentlichungstag der Anmeldung: 19.07.2000
(73) Patentinhaber: HILTI Aktiengesellschaft, 9494 Schaan (LI)
(72) Erfinder: Dittrich, Tilo, 6805 Gisingen (AT); Bönig, Stefan, 88142 Wasserburg (DE)
(74) Vertreter: Wildi, Roland

(56) Entgegenhaltungen:
- EP-A- 0 042 063
- DE-A- 2 044 920

## Beschreibung

Die Erfindung betrifft ein pulverkraftbetriebenes Setzgerät gemäss dem Oberbegriff des Patentanspruchs 1.

Zum Eintreiben von beispielsweise nagelförmigen Befestigungselementen in harte Untergründe wie Gestein, Beton, Stahl oder dergleichen werden pulverkraftbetriebene Setzgeräte verwendet. Ein derartiges Setzgerät ist beispielsweise aus der DE-20 44 920 bekannt. Dieses Setzgerät weist einen Trigger auf, der mit einem federbelasteten Übertragungselement zusammenwirkt, das in Form eines einarmigen Hebels ausgebildet ist und um eine erste, fest in einem Gehäuse des Setzgerätes angeordnete Lagerstelle schwenkbar ist. Das freie Ende des Übertragungselementes ist mit einem Nocken versehen, der mit einer Steuerkurve eines federbelasteten Transporthebels zusammenwirkt, der ebenfalls um eine fest im Gehäuse des Setzgerätes angeordnete zweite Lagerstelle schwenkbar ist. Das freie Ende ist mit einer Mitnahmeklaue versehen, die aus der lichten Weite eines Kartuschenkanals des Setzgerätes ausrückbar ist.

Bei einer Betätigung des Triggers gleitet der Nocken des Übertragungselementes auf der Steuerkurve des Transporthebels entlang und spannt diesen vor. Aufgrund der dabei auftretenden hohen Gleitreibung zwischen dem Nocken und der Steuerkurve wird für die Betätigung des Triggers sehr viel Kraft benötigt. Dies führt schnell zu Ermüdungserscheinungen bei der Bedienungsperson.

Der Erfindung liegt die Aufgabe zugrunde, ein pulverkraftbetriebenes Setzgerät zu schaffen, das einfach und sicher bedienbar ist, dessen Trigger mit wenig Kraft betätigbar ist und eine Transporteinrichtung für ein streifenförmiges Kartuschenmagazin aufweist, die nach dem Anpressen des Setzgerätes gegen einen Untergrund bei der Betätigung des Triggers vorspannbar ist und beim Abheben des Setzgerätes von dem Untergrund das Kartuschenmagazin weitertransportiert.

Die Lösung dieser Aufgabe erfolgt durch ein pulverkraftbetriebenes Setzgerät, welches die im kennzeichnenden Abschnitt des Patentanspruchs 1 angeführten Merkmale aufweist.

Durch die im wesentlichen reibungsfreie Verbindung zwischen dem Übertragungselement und dem Transporthebel, ist nur eine geringe Kraft für die Betätigung des Triggers erforderlich, so dass ein ermüdungsfreies Arbeiten mit dem Setzgerät möglich ist.

Die Anordnung der ersten Lagerstelle auf dem Transporthebel hängt von der Grösse des Betätigungswegs des Triggers und des Transportwegs einer Mitnahmeklaue des Transporthebels ab. Zweckmässigerweise entspricht daher der Abstand der ersten Lagerstelle von der zweiten Lagerstelle einem 0,15 bis 0,5 fachen Abstand zwischen der Mitnahmeklaue und der zweiten Lagerstelle.

Um beispielsweise bei Setzgeräten, die über eine automatische Befestigungselementezuführung verfügen, einen Transport des Kartuschenmagazins verhindern zu können, bevor einem Führungsrohr des Setzgerätes ein weiteres Befestigungselement zugeführt wird, weist vorteilhafterweise das Übertragungselement Mittel zum Zusammenwirken mit einem federbelasteten, um eine im Gehäuse fest angeordnete dritte Lagerstelle schwenkbaren Sperrhebel auf.

Unter Zusammenwirken versteht man beispielsweise ein axiales Festlegen des Übertragungselementes und somit auch ein Festlegen des Transporthebels in dessen vorgespannter Stellung, wobei das der Festlegung dienende Mittel vorzugsweise von einer Anschlagkante des Übertragungselementes gebildet ist, die mit einer Anschlagschulter des Sperrhebels zusammenwirkt.

Damit ein Schwenken des Sperrhebels in Abhängigkeit des Anpressweges des Setzgerätes erfolgen kann, wird zweckmässigerweise die Schwenkbewegung des Sperrhebels mit einem parallel zur Setzrichtung versetzbaren Anpressstift erreicht.

Um beispielsweise die bei einem Anpressvorgang erfolgende Längsbewegung des Anpressstiftes auf einen seitlich neben dem Anpressstift angeordneten Sperrhebel umlenken zu können, ist zweckmässigerweise zur Versetzung des Sperrhebels ein am Anpressstift angeordnetes Steuerelement vorgesehen.

Eine einfache und sichere Betätigung des Sperrhebels wird beispielsweise mit einem Steuerelement erreicht, das vorteilhafterweise einen mit einer Steuerkontur des Sperrhebels zusammenwirkenden Vorsprung aufweist.

Die Erfindung wird anhand von Zeichnungen, die ein Ausführungsbeispiel wiedergeben, näher erläutert. Es zeigen:
- Fig.1: einen Kartuschenmagazin-Transportmechanismus eines erfindungsgemässen, pulverkraftbetriebenen Setzgerätes in der Ausgangsstellung;
- Fig. 2: den Transportmechanismus gemäss Fig. 1, während eines Anpressvorganges;
- Fig. 3: den Tansportmechanismus gemäss den Fig. 1 und 2 in der angepressten Stellung; der Trigger ist gedrückt.

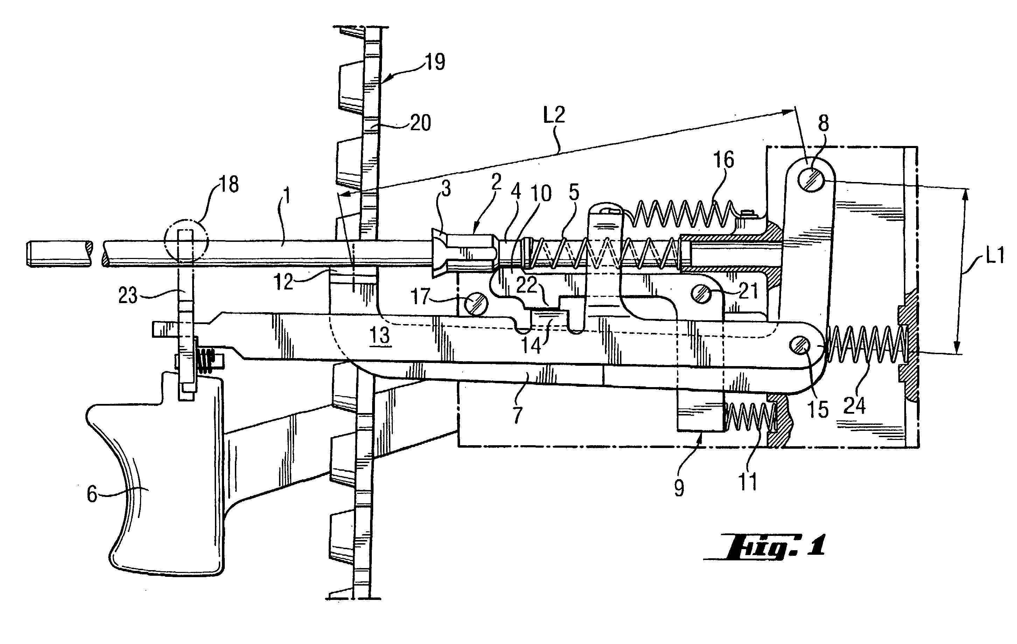

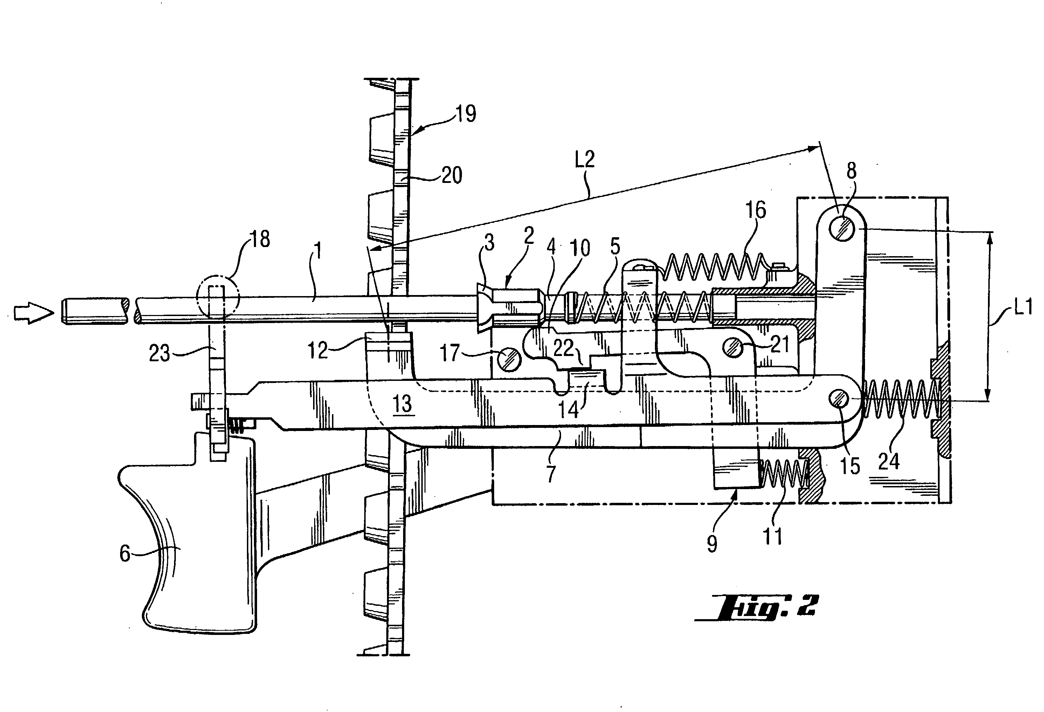

Der in den Fig. 1 bis 3 dargestellte Transportmechanismus für Kartuschenmagazine 19 ist Teil eines nicht vollständig dargestellten pulverkraftbetriebenen Setzgerätes, das ein Gehäuse, einen mit dem Gehäuse in Verbindung stehenden Handgriff, einen im Handgriff angeordneten, um einen Drehachse 18 schwenkbaren Trigger 6, einen um eine fest im Gehäuse angeordnete, zweite Lagerstelle schwenkbaren Transporthebel 7 und ein um eine am Transporthebel 7 angeordnete, erste Lagerstelle 15 schwenkbares Übertragungselement 13 aufweist. Das Übertragungselement 13 ist gegen die Kraft eines Federelementes 16 schwenkbar. In einer Ausgangsstellung des Übertragungselementes 13 liegt dieses an einem Anschlag 17 des Gehäuses an.

Der Abstand L1 zwischen der ersten Lagerstelle 15 auf dem Transporthebel 7 und der zweiten Lagerstelle 8 um den der Transporthebel 7 schwenkbar ist, entspricht dem 0,15 bis 0,5-fachen Abstand L2 zwischen der zweiten Lagerstelle 8 und einer Mitnahmeklaue 12 des Transporthebels 7. Der Transporthebel 7 ist im wesentlichen U-förmig ausgebildet, wobei im Endbereich eines ersten längeren Schenkels die zweite Lagerstelle 8 und im Endbereich eines zweiten kürzeren Schenkels die Mitnahmeklaue 12 angeordnet ist. Diese Mitnahmeklaue 12 greift in Rasten 20 des Kartuschenmagazins 19 und führt so die Vorwärtsbewegung aus. Die erste Lagerstelle 15 befindet sich an einem, der zweiten Lagerstelle 8 gegenüberliegenden Endbereich des ersten Schenkels.

Das Übertragungselement 13 verjüngt sich zu dessen freien Ende hin und durchsetzt mit seinem verjüngten Bereich eine nicht näher dargestellte Durchtrittsöffnung eines Trägers 23, an dem der Trigger 6 befestigt ist. Innerhalb dieser Durchtrittsöffnung ist der verjüngte Bereich des Übertragungselementes 13 parallel zur Längserstreckung des Kartuschenmagazins 19 versetzbar.

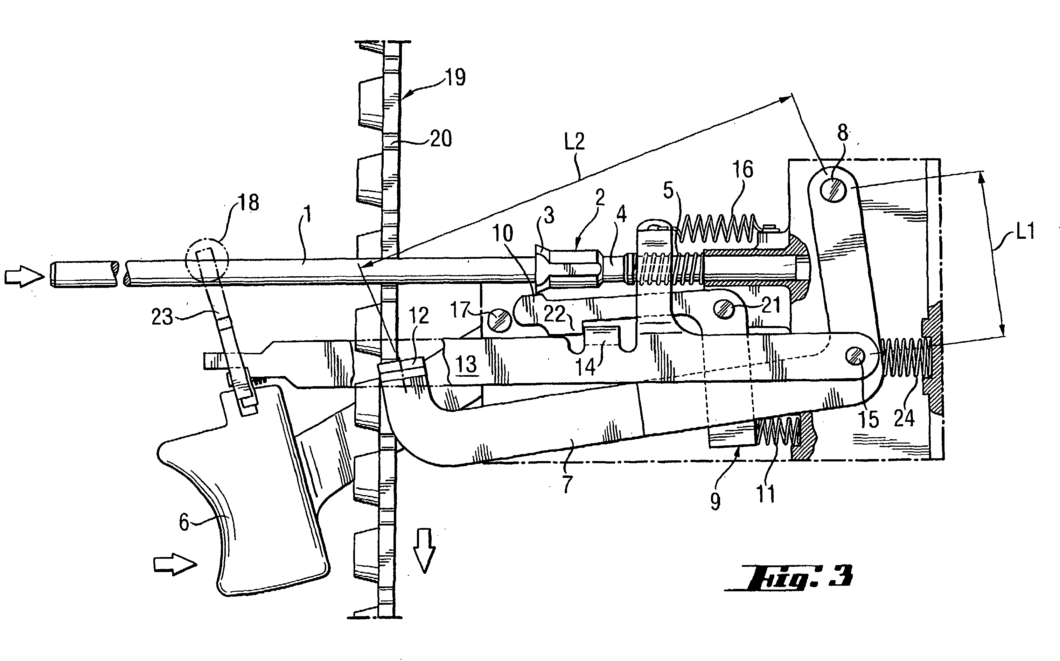

Das Übertragungselement 13 weist eine Anschlagkante 14 auf, die in einer gedrückten Stellung des Triggers 6, gemäss Fig. 3, formschlüssig mit einer Anschlagschulter 22 eines Sperrhebels 9 zusammenwirkt. Der Sperrhebel 9 ist um eine fest im Gehäuse angeordnete, dritte Lagerstelle 21 gegen die Kraft einer Feder 11 schwenkbar. Auf einer der Anschlagschulter 22 gegenüberliegenden Seite des Sperrhebels 9 befindet sich eine Steuerkontur 10, die mit einem Vorsprung 3 bzw. einer Raste 4 eines Steuerelementes 2 zusammenwirkt, das axial fest auf einem Anpressstift 1 angeordnet ist. Dieser Anpressstift 1 ist parallel zur Betätigungsrichtung des Triggers 6 gegenüber der Kraft einer Druckfeder 5 versetzbar. Die Druckfeder 5 schliesst sich entgegen der Betätigungsrichtung des Triggers 6 an das Steuerelement 2 an und umgibt den Anpressstift 1.

Im folgenden wird die Funktionsweise der erfindungsgemässen Transportvorrichtung erläutert.

Beim Anpressen des Setzgerätes gegen einen nicht dargestellten Untergrund wird der Anpressstift 1 in Betätigungsrichtung des Triggers 6 versetzt. Das auf dem Anpressstift 1 angeordnete Steuerelement 2 schwenkt dabei den Sperrhebel 9 mit seiner Anschlagschulter 22 um die dritte Lagerstelle 21 in Richtung Übertragungselement 13 und das Übertragungselement 13 um die erste Lagerstelle 15 in eine vorgespannte Stellung. Bei der Betätigung des Triggers 6 erfolgt eine Versetzung des vorgespannten Übertragungselementes 13 in Betätigungsrichtung des Triggers 6, so dass die Anschlagschulter 22 formschlüssig eine Anschlagkante 14 des Übertragungselementes 13 hintergreifen kann. Die mit dem Transporthebel 7 zusammenwirkende Kartuschentransportfeder 24 wird dabei vorgespannt. Beim Loslassen des Triggers 6 verbleibt das Übertragungselement 13 in dieser verriegelten Position. Erst beim Abheben des Setzgerätes von dem Untergrund, erfolgt eine axiale Versetzung des Anpressstiftes 1. Dabei gibt das auf dem Anspressstift 1 angeordnete Steuerelement 2 den Sperrhebel 9 und dieser das Übertragungselement 13 frei, so dass dieses von dem Federelement 16 wieder in seine Ausgangsstellung zurückversetzt werden kann und der mit dem Übertragungselement 13 zusammenwirkende Transporthebel 7 mit Hilfe der Kartuschentransportfeder 24 seine Transportbewegung ausführen kann.

## Patentansprüche

1. Pulverkraftbetriebenes Setzgerät mit einem Gehäuse, einem Kartuschenkanal, einem Trigger (6), einem um eine erste Lagerstelle (15) schwenkbaren, mit dem Trigger (6) zusammenwirkenden, federbelasteten Übertragungselement (13), das im wesentlichen parallel zur Betätigungsrichtung des Triggers (6) versetzbar ist und einem mit dem freien Ende des Übertragungselementes (13) zusammenwirkenden, um eine fest im Gehäuse angeordnete zweite Lagerstelle (8) schwenkbaren, federbelasteten, einarmigen Transporthebel (7) mit einer am freien Ende des Transporthebels (7) angeordneten Mitnahmeklaue (12), die im wesentlichen parallel zur Längserstreckung des Kartuschenkanals versetzbar und aus der lichten Weite des Kartuschenkanals ausrückbar ist, **dadurch gekennzeichnet, dass** die erste Lagerstelle (15) des Übertragungselementes (13) zwischen der zweiten Lagerstelle (8) und der Mitnahmeklaue (12) an dem Transporthebel (7) angeordnet ist.

2. Setzgerät nach Anspruch 1, **dadurch gekennzeichnet, dass** der Abstand (L1) der ersten Lagerstelle (15) von der zweiten Lagerstelle (8) einem 0,15 bis 0,5 fachen Abstand (L2) zwischen der Mitnahmeklaue (12) und der zweiten Lagerstelle (8) entspricht.

3. Setzgerät nach Anspruch 1 oder 2, **dadurch gekennzeichnet, dass** das Übertragungselement (13) Mittel zum Zusammenwirken mit einem federbelasteten, um eine im Gehäuse fest angeordnete dritte Lagerstelle (21) schwenkbaren Sperrhebel (9) aufweist.

4. Setzgerät nach Anspruch 3, **dadurch gekennzeichnet, dass** das Mittel von einer Anschlagkante (14) gebildet ist, die mit einer Anschlagschulter (22) des Sperrhebels (9) zusammenwirkt.

5. Setzgerät nach Anspruch 4, **dadurch gekennzeichnet, dass** der Sperrhebel (9) mit einem parallel zur Setzrichtung versetzbaren Anpressstift (1) in eine Schwenkbewegung versetzbar ist.

6. Setzgerät nach Anspruch 5, **dadurch gekennzeichnet, dass** zur Versetzung des Sperrhebels (9) ein am Anpressstift (1) angeordnetes Steuerelement (2) vorgesehen ist.

7. Setzgerät nach Anspruch 6, **dadurch gekennzeichnet, dass** das Steuerelement (2) einen mit einer Steuerkontur (10) des Sperrhebels (9) zusammenwirkenden Vorsprung (3) aufweist.

## Claims

1. Powder-actuated fastener driving tool comprising a casing, a cartridge channel, a trigger (6), a spring-loaded transmission element (13) which is adapted to swivel on a first bearing (15) and cooperates with the trigger (6), and which is adapted to be displaced substantially parallel to the direction in which the trigger (6) is operated, and a spring-loaded, one-armed transfer lever (7) which cooperates with the free end of the transmission element (13), is adapted to swivel on a second bearing (8) fixedly disposed in the casing, and which disposed on the free end of the transfer lever (7) has a driving claw (12) which is adapted to be displaced substantially parallel to the longitudinal extension of the cartridge channel and can be disengaged from the clearance of the cartridge channel, **characterised in that** the first bearing (15) of the transmission element (13) is arranged on the transfer lever (7), between the second bearing (8) and the driving claw (12).

2. Fastener driving tool according to claim 1, **characterised in that** the distance (L1) from the first bearing (15) to the second bearing (8) corresponds to 0.15 to 0.5 times the distance (L2) between the driving claw (12) and the second bearing (8).

3. Fastener driving tool according to claim 1 or 2, **characterised in that** the transmission element (13) incorporates means for cooperating with a spring-loaded catch lever (9) which is adapted to swivel on a third bearing (21) fixedly disposed in the casing.

4. Fastener driving tool according to claim 3, **characterised in that** the means is constituted by a detent edge (14) which cooperates with a detent shoulder (22) on the catch lever (9).

5. Fastener driving tool according to claim 4, **characterised in that** the catch lever (9) is adapted to be set in a swivelling motion by a contact pressure pin (1) which is adapted to be displaced parallel to the fastener driving direction.

6. Fastener driving tool according to claim 5, **characterised in that** a control element (2) is arranged on the contact pressure pin (1) for displacement of the catch lever (9).

7. Fastener driving tool according to claim 6, **characterised in that** the control element (2) incorporates a projection (3) which cooperates with a control contour (10) on the catch lever (9).

## Revendications

1. Outil de scellement par explosif, comprenant un carter, un canal à cartouches, une gâchette (6), un élément de transmission sollicité par ressort (13) qui peut basculer autour d'un premier point d'appui (15), qui coopère avec la gâchette (6) et qui est déplaçable sensiblement parallèlement à la direction d'actionnement de la gâchette (6), et un levier d'avance à un bras sollicité par ressort (7) qui coopère avec l'extrémité libre de l'élément de transmission (13), qui peut basculer autour d'un second point d'appui (8) monté fixe dans le carter et qui est associé à une griffe d'entraînement (12), laquelle est disposée à l'extrémité libre du levier d'avance (7), est déplaçable sensiblement parallèlement à l'extension longitudinale du canal à cartouches et peut sortir de l'ouverture libre du canal à cartouches, **caractérisé en ce que** le premier point d'appui (15) de l'élément de transmission (13) est situé entre le second point d'appui (8) et la griffe d'entraînement (12) disposée sur le levier d'avance (7).

2. Outil de scellement selon la revendication 1, **caractérisé en ce que** la distance (L1) du premier point d'appui (15) au second point d'appui (8) correspond à 0,15 à 0,5 fois la distance (L2) entre la griffe d'entraînement (12) et le second point d'appui (8).

3. Outil de scellement selon la revendication 1 ou 2, **caractérisé en ce que** l'élément de transmission (13) comporte un moyen de coopération avec un levier de blocage sollicité par ressort (9) qui peut basculer autour d'un troisième point d'appui (21) monté fixe dans le carter.

4. Outil de scellement selon la revendication 3, **caractérisé en ce que** le moyen est formé par une arête de butée (14) qui coopère avec un épaulement de butée (22) du levier de blocage (9).

5. Outil de scellement selon la revendication 4, **caractérisé en ce que** le levier de blocage (9) peut être animé d'un mouvement basculant par une broche de mise en contact (1) déplaçable parallèlement à la direction de scellement.

6. Outil de scellement selon la revendication 5, **caractérisé en ce qu'**un élément de commande (2) disposé sur la broche de mise en contact (1) est prévu pour déplacer le levier de blocage (9).

7. Outil de scellement selon la revendication 6, **caractérisé en ce que** l'élément de commande (2) comporte une saillie (3) coopérant avec un profil de commande (10) du levier de blocage (9).
